# EUROPÄISCHE PATENTSCHRIFT

(11) **EP 1 384 049 B1**
(45) Veröffentlichungstag und Bekanntmachung des Hinweises auf die Patenterteilung: **26.01.2011**
(21) Anmeldenummer: 02737744.9
(22) Anmeldetag: 19.03.2002
(51) Int. Cl.: G01G 23/01, G01L 25/00, G01L 5/10, B60N 2/00, B60R 22/00

(54) **EINRICHTUNG UND VERFAHREN ZUR KALIBRIERUNG EINES SENSORS**
DEVICE AND METHOD FOR CALIBRATING A SENSOR
DISPOSITIF ET PROCEDE PERMETTANT LE CALIBRAGE D'UN DETECTEUR

(30) Priorität: 21.04.2001 DE 10119600
(43) Veröffentlichungstag der Anmeldung: 28.01.2004
(73) Patentinhaber: ROBERT BOSCH GMBH, 70442 Stuttgart (DE)
(72) Erfinder: MATTES, Bernhard, 74343 Sachsenheim (DE); GROEGER, Ulrike, 70499 Stuttgart (DE)
(86) Internationale Anmeldenummer: PCT/DE2002/000983
(87) Internationale Veröffentlichungsnummer: WO 2002/086434

(56) Entgegenhaltungen:
- EP-A- 0 302 385
- EP-A- 0 406 735
- EP-A- 0 997 358
- WO-A-02/14101
- WO-A-98/25112
- DE-A- 19 940 161
- DE-U- 29 918 199
- US-A- 5 906 393
- PATENT ABSTRACTS OF JAPAN vol. 009, no. 018 (M-353), 25. Januar 1985 (1985-01-25) & JP 59 164248 A (NIPPON SOKEN INC.), 17. September 1984 (1984-09-17)

## Beschreibung

### Stand der Technik

Die Erfindung betrifft eine Einrichtung und ein Verfahren zum Kalibrieren eines Gurtkraftsensors.

Das Auslösen von Rückhaltemitteln in einem Kraftfahrzeug erfolgt in der Regel in Abhängigkeit von verschiedenen Parametern, wie z.B. der Schwere des Aufpralls sowie der Position und des Gewichts der Insassen. In diesem Zusammenhang ist es sinnvoll, auch die jeweilige Gurtkraft zu berücksichtigen, was nachfolgend anhand eines Beispiels näher erläutert wird.

Es ist bekannt, zum Zünden eines mehrstufigen Airbags und zum Auslösen von Gurtstraffem Informationen über das Profil der einzelnen Insassen zu erfassen, die Rückschlüsse auf deren Gewicht zulassen. Dazu wird in der Regel ein Kraftsensor bzw. eine Kraftsensoranordnung verwendet, die im Sitz verbaut ist und beispielsweise in Form einer Sensormatte mit druckempfindlichen Sensorzellen realisiert ist. Die Sensorzellen sind in einer Matrix angeordnet und können einzeln angesteuert werden, so dass sich die Druckverteilung im Sitz in Form einer Wertematrix erfassen lässt. Je schwerer eine Person ist, um so stärker wird das Sitzmaterial eingedrückt und um so größer ist die Anzahl der aktivierten Sensorzellen. Außerdem ist der von einer Sensorzelle erfasste Druckwert per se natürlich abhängig von der jeweiligen Druckbeaufschlagung. Bei der Auswertung der von den einzelnen Sensorzellen der Sensormatte erfassten Druckdaten wird neben den einzelnen Druckwerten also auch die Anzahl der aktivierten Sensorzellen berücksichtigt. Die Auswertung erfolgt durch ein ebenfalls im Sitz verbautes Steuergerät. Das Ergebnis der Auswertung wird dem Airbagsteuergerät übermittelt, so dass die individuelle Sitzbelegung beim Auslösen der Rückhaltemittel berücksichtigt werden kann. Dieses Verfahren ist weitgehend unabhängig von äußeren Bedingungen, wie Kälte oder Verschleiß. Dennoch sollte die Kraftsensoranordnung in regelmäßigen Zeitintervallen kalibriert werden, um konstante Messergebnisse bei einer gegebenen Gewichtskraft zu gewährleisten.

Ein Kindersitz lässt sich in der Regel anhand seines nicht menschenähnlichen Sitzprofils erkennen. Wird ein Kindersitz aber mit einer starken Gurtkraft von beispielsweise 150 N angeschnallt, so wird er so stark in den Sitz gedrückt, dass sein Sitzprofil verfälscht wird und er schwerer erscheint als er tatsächlich ist.

Allerdings kann eine Gurtkraft von über 30 N beim Anschnallen von Personen praktisch nicht auf Dauer angelegt werden, da der Gurt in der Regel nachgibt. Eine derart hohe Gurtkraft wäre zudem so unbequem, dass sie von einer Person nicht beibehalten würde. Es kann daher mit ziemlicher Sicherheit davon ausgegangen werden, dass keine Person sondern ein Kindersitz oder ein anderer Gegenstand angeschnallt ist, wenn die Gurtkraft einen bestimmten Schwellwert übersteigt. Mit Hilfe der Information der anliegenden Gurtkraft kann also zumindest in gewissem Umfang bereits eine Belegungserkennung vorgenommen werden

Voraussetzung dafür, dass die vom Gurt ausgeübte Kraft bei der Auswertung der Druckdaten berücksichtigt werden kann, ist die Verwendung eines Gurtkraftsensors. Allerdings muss dazu ein auf Dauer bzw. über die Lebensdauer des Kraftfahrzeugs konstanter Messwert des Gurtkraftsensors bei gegebener Gurtkraft gewährleistet sein. Dies erweist sich in Praxis insbesondere bei statischen Gurtkraftsensoren als problematisch, da hier häufig eine zeitliche Drift der Messwerte auftritt.

### Vorteile der Erfindung

Um einer alterungsbedingten Messwertverfälschung entgegenzuwirken, werden mit der vorliegenden Erfindung eine Einrichtung und ein Verfahren zum Kalibrieren eines Gurtkraftsensors vorgeschlagen, die auf einfache Weise ein zuverlässiges Kalibrieren des Sensors ermöglichen.

Bei einem Gurtkraftsensor kann der unbelastete Zustand einfach über den Gurtschlosszustand erkannt werden, da sich ein funktionsfähiger Gurtkraftsensor bei geöffnetem Gurtschloss mit Sicherheit im unbelasteten Zustand befindet. Die Überwachung des Gurtschlosszustands wird mit Hilfe eines in das Gurtschloss integrierten Gurtschlossschalters erfolgen. Der Kalibriervorgang könnte also in einfacher Weise durch ein entsprechendes Signal des Gurtschlossschalters initiiert werden.

Die mit der vorliegenden Erfindung vorgeschlagene Kalibrierung eines genthaft sensors, sollte in häufigeren Zeitintervallen wiederholt werden, um auf Dauer zuverlässige Messergebnisse zu gewährleisten. Nur dann können die von einem Gurtkraftsensor gewonnenen Informationen für eine adaptive Auslösung der entsprechenden Rückhaltemittel genutzt werden.

### Zeichnung

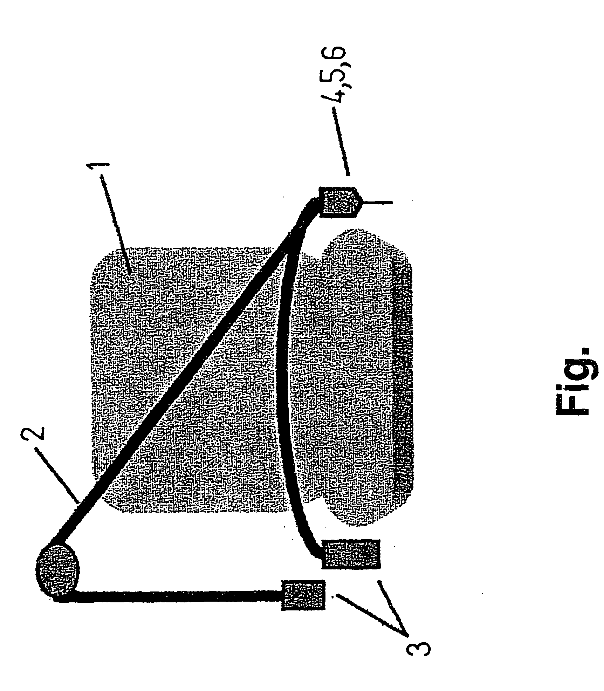

Wie bereits voranstehend erwähnt, gibt es verschiedene Möglichkeiten, die Lehre der vorliegenden Erfindung in vorteilhafter Weise auszugestalten und weiterzubilden. Dazu wird einerseits auf die den Patentansprüchen 1 und 3 nachgeordneten Patentansprüche und andererseits auf die nachfolgende Beschreibung eines Ausführungsbeispiels der Erfindung anhand der Zeichnung verwiesen.

Die einzige Figur zeigt eine mögliche Anordnung eines Gurtkraftsensors mit einer erfindungsgemäßen Einrichtung zum Kalibrieren in einem Kraftfahrzeug.

### Beschreibung des Ausführungsbeispiels

In der einzigen Figur sind ein Fahrzeugsitz 1 und der zugehörige Sicherheitsgurt 2 mit Gurthalterungen 3 und einem Gurtschloss 4 dargestellt, wie sie in einem hier nicht dargestellten Kraftfahrzeug angeordnet sein könnten.

Der Fahrzeugsitz 1 ist im hier beschriebenen Ausführungsbeispiel mit einer Sensormatte ausgestattet, wie sie eingangs beschrieben worden ist. Es könnten aber auch andere Mittel zur Gewichtsbestimmung vorgesehen sein. Zur Ergänzung der mit Hilfe der Sensormatte gewonnenen Informationen über die Sitzbelegung ist ein Gurtkraftsensor 5 vorgesehen, der hier im Gurtschloss 4 integriert ist. Der Gurtkraftsensor könnte aber beispielsweise auch seitlich am Gurtschloss, zwischen dem Gurtschloss und dessen Verankerung im Fahrzeug angeordnet sein.

Das Gurtschloss 4 ist außerdem mit einem Gurtschlossschalter 6 ausgestattet, mit dem der jeweilige Gurtschlosszustand erfasst wird, d.h. ob das Gurtschloss geöffnet oder geschlossen ist. Da sich der Gurtkraftsensor 5 bei geöffnetem Gurtschloss 4 im unbelasteten Zustand befindet, kann dieser Zustand mit Hilfe des Gurtschlossschalters 6 sicher erkannt werden.

Das Signal des Gurtschlossschalters 6 wird zusammen mit dem Signal des Gurtkraftsensors 5 einem hier nicht dargestellten Steuergerät zugeführt, das ebenfalls im Fahrzeugsitz 1 angeordnet sein kann. Die beiden Signale werden dann im Rahmen der Insassenklassifizierung ausgewertet.

In bestimmten auf den Gurtkraftsensor 5 abgestimmten Zeitintervallen wird der Gurtkraftsensor kalibriert, um einer alterungsbedingten Messwertverfälschung beispielsweise durch einen zeitlich veränderlichen Offset der Sensorkennlinie entgegenzuwirken. Dazu wird der Messwert des Gurtkraftsensors 5 auf Null eingestellt, wenn sich der Gurtkraftsensor 5 im unbelasteten Zustand befindet, also wenn das Gurtschloss 4 geöffnet ist.

Sollte dieser Kalibriervorgang durch Schließen des Gurtschlosses 4 unterbrochen werden, so muss der Kalibriervorgang zum nächstmöglichen Zeitpunkt wiederholt werden. Das Zeitintervall zwischen den einzelnen Kalibriervorgängen sollte also kürzer als unbedingt erforderlich gewählt werden.

Abschließend sei nochmals darauf hingewiesen, dass die Kalibrierung des Gurtkraftsensors nicht unbedingt im unbelasteten Zustand durch Einstellung des Nullwerts erfolgen muss. Für die Erfindung wesentlich ist lediglich, dass sich der Gurtkraftsensor bei der Kalibrierung in irgendeinem definierten Zustand befindet, so dass der diesem definierten Zustand entsprechende Messwert eingestellt werden kann. Voraussetzung dafür sind Mittel zum Erkennen eines solchen definierten Zustands. Diese müssen nicht zwangsläufig in Form eines Gurtschlossschalters realisiert sein.

## Patentansprüche

1. Einrichtung zum Kalibrieren eines Gurtkraftsensors, **dadurch gekennzeichnet, dass** Mittel zum Erkennen des unbelasteten Zustands des Gurtkraftsensors (5) mit Mittel zum Erfassen des Gurtschlosszustands vorgeschen sind.

2. Einrichtung nach Anspruch 1, **dadurch gekennzeichnet, dass** die Mittel zum Erfassen des Gurtschlosszustands mindestens einen Gurtschlossschalter (6) umfassen.

3. Verfahren zum Kalibrieren eines Gurtkraftsensors, **dadurch gekennzeichnet, dass** der Zustand des Gurtschlosses (4) erfasst wird und dass aufgrund des Zustands des Gurtschlosses (4) erkannt wird, wann sich der Gurtkraftsensor (5) im unbelasteten Zustand befindet.

4. Verfahren nach Anspruch 3, **dadurch gekennzeichnet, dass** der Zustand des Gurtschlosses (4) mit Hilfe eines Gurtschlossschalters (6) erfasst wird.

5. Verwendung einer Einrichtung nach einem der Ansprüche 1 oder 2 oder eines Verfahrens nach einem der Ansprüche 3 oder 4 zum wiederholten Kalibrieren des Gurtkraftsensors, vorzugsweise in regelmäßigen Zeitintervallen.

## Claims

1. Device for calibrating a belt force sensor, **characterized in that** means for identifying the load-free state of the belt force sensor (5) are provided with means for detecting the belt buckle state.

2. Device according to Claim 1, **characterized in that** the means for detecting the belt buckle state comprise at least one belt buckle switch (6).

3. Method for calibrating a belt force sensor, **characterized in that** the state of the belt buckle (4) is detected, and **in that** the state of the belt buckle (4) is used to identify when the belt force sensor (5) is in the load-free state.

4. Method according to Claim 3, **characterized in that** the state of the belt buckle (4) is detected with the aid of a belt buckle switch (6).

5. Use of a device according to either of Claims 1 and 2 or of a method according to either of Claims 3 and 4 for repeatedly calibrating the belt force sensor, preferably at regular intervals.

## Revendications

1. Dispositif pour calibrer un capteur de force de ceinture, **caractérisé en ce que** des moyens pour reconnaître l'état non sollicité du capteur de force de ceinture (5) sont pourvus de moyens pour détecter l'état de bouclage de la ceinture.

2. Dispositif selon la revendication 1, **caractérisé en ce que** les moyens pour détecter l'état de bouclage de la ceinture comprennent au moins un commutateur de boucle de ceinture (6).

3. Procédé pour calibrer un capteur de force de ceinture, **caractérisé en ce que** l'état de la boucle de ceinture (4) est détecté et sur la base de l'état de la boucle de ceinture (4), on reconnaît quand le capteur de force de ceinture (5) se trouve dans l'état non sollicité.

4. Procédé selon la revendication 3, **caractérisé en ce que** l'état de la boucle de ceinture (4) est détecté à l'aide d'un commutateur de boucle de ceinture (6).

5. Utilisation d'un dispositif selon la revendication 1 ou 2, ou d'un procédé selon la revendication 3 ou 4, pour calibrer de manière répétitive le capteur de force de ceinture, de préférence à intervalles de temps réguliers.
